# EUROPÄISCHE PATENTSCHRIFT

(11) **EP 2 517 543 B1**
(45) Veröffentlichungstag und Bekanntmachung des Hinweises auf die Patenterteilung: **11.06.2014**
(21) Anmeldenummer: 12002876.6
(22) Anmeldetag: 24.04.2012
(51) Int. Cl.: A01B 69/04, A01B 69/00

(54) **Landwirtschaftliche Maschine**
Agricultural machine
Machine agricole

(30) Priorität: 29.04.2011 DE 102011100054
(43) Veröffentlichungstag der Anmeldung: 31.10.2012
(73) Patentinhaber: Alois Pöttinger Maschinenfabrik Ges.m.b.H., 4710 Grieskirchen (AT)
(72) Erfinder: Baldinger, Martin, 4722 Peuerbach (AT); Edelbauer, Roland, 4600 Wels (AT); Hofinger, Markus, 4721 Altschwendt (AT); Reininger, Markus, 4753 Taiskirchen (AT); Bumberger, Rainer, 4141 Pfarrkirchen (AT)
(74) Vertreter: Thoma, Michael

(56) Entgegenhaltungen:
- EP-A1- 1 813 142
- EP-A1- 2 057 875
- EP-A2- 0 887 660
- EP-A2- 1 266 554
- EP-A2- 1 332 659
- US-B1- 6 389 785

## Beschreibung

Die vorliegende Erfindung betrifft eine landwirtschaftliche Maschine mit einer Anbauvorrichtung zum Anbau verschiedener Anbaugeräte zur Erntegut- und/oder Bodenbearbeitung, einer Bodenerfassungseinrichtung zum berührungslosen Erfassen einer Boden- und/oder Erntegutkontur, sowie einer Steuervorrichtung zur Steuerung der landwirtschaftlichen Maschine und/oder des Anbaugeräts in Abhängigkeit der erfassten Boden- und/oder Erntegutkontur, wobei die Bodenerfassungseinrichtung zumindest eine Lasermessvorrichtung umfasst, deren Laserstrahl zum Abtasten der Boden- und/oder Erntegutkontur über einen Abtastbereich führbar ist.

Bei Landmaschinen ist es vorteilhaft, diverse Arbeitsaggregate der Maschinen in Abhängigkeit der vor dem Arbeitsaggregat liegenden Bodenkontur bzw. Erntegutkontur zu steuern. Beispielsweise kann für Ladewagen vorgesehen werden, die sog. Pickup, also die Erntegutaufnahmevorrichtung, die üblicherweise eine rotierende Stachelwalze aufweist, sozusagen schwebend über den Boden zu führen. Hierzu wird mittels eines Bodensensors die Bodenkontur vor der Pickup erfasst, um die Letztere bei Bodenwellen anzuheben und in Senken abzusenken, um eine präzise Erntegutaufnahme zu erreichen, ohne auf den Boden aufzufahren. Es wurde auch schon vorgeschlagen, vgl. EP 13 56 729 B1, mittels eines Radarsensors die Dichte und die Feuchte des Feldbewuchses zu ermitteln und in Abhängigkeit dieser ermittelten Parameter das Schneidwerk eines Mähdreschers zu steuern. Ferner schlägt die DE 198 59 875 A1 eine Heuwerbungsmaschine vor, an der ein kapazitiv oder nach dem Dopplereffekt arbeitender Sensor vorgesehen ist, mit Hilfe dessen nicht unmittelbar die Bodenoberfläche selbst, sondern ein darauf liegender Erntegutschwad erfasst werden soll, um die Arbeitsorgane der Heuwerbungsmaschine anheben zu können, wenn der genannte Sensor einen Randschwad erfasst, der nicht von den Arbeitsorganen bearbeitet werden soll. Die EP 18 13 142 B1 schlägt weiterhin eine Landmaschine vor, bei der ein akustischer Abtastsensor in unterschiedlichen Frequenzen Abtastsignale aussendet, um einerseits die Bodenkontur selbst und andererseits die Kontur eines darauf liegenden Erntegutschwads zu erfassen. Hierdurch kann einerseits die Höheneinstellung der Pickup in Abhängigkeit der erfassten Bodenkontur und andererseits die Antriebsleistung der Pickup in Abhängigkeit des erfassten Schwadvolumens variiert werden.

Es wurde auch bereits schon vorgeschlagen, die Boden- bzw. Erntegutkontur eines von einem Feldhäcksler zu bearbeitenden Erntegutschwads mittels einer Lasermessvorrichtung zu bestimmen, deren Laserstrahl zum Abtasten der Boden- bzw. Erntegutkontur über einen Abtastbereich geführt wird, der in der Fahrspur des Schleppers ausreichend weit vor dem Schlepper liegt, vgl. EP 0 887 660 B1. Der Laserstrahl wird hierbei schräg geneigt nach vorne/unten gelenkt und in einer Ebene von rechts nach links und zurück geführt, so dass der Laserstrahl die verschiedenen Abschnitte des Schwads abtastet. Das Lasersignal wird hierbei an einem jeweiligen Konturpunkt reflektiert, wobei mittels einer Laufzeitmessung der Abstand des Konturpunktes bestimmt werden kann, woraus in Verbindung mit den bekannten Geometriedaten des Neigungswinkels des Laserstrahls zur Horizontalen, des Ablenkwinkels des Laserstrahls gegenüber einer vertikalen, in Fahrtrichtung verlaufenden Ebene und der Anbringungshöhe des Lasermessgeräts die exakte Lage des jeweiligen Konturpunkts bestimmbar ist.

Die bei derartigen Lasermessvorrichtungen zu verarbeitenden Datenmengen sind aufgrund der eingehenden Geometriegrößen und der recht komplizierten Berechnung sehr hoch, insbesondere dann, wenn der Abtastbereich nicht klein gehalten werden kann und der Laserstrahl über eine größere Breite den zu bearbeitenden Feldabschnitt abscannen muss. Bei der Erfassung eines Schwads kann der Abtastbereich des Laserstrahls noch einigermaßen begrenzt gehalten werden. Bei anderen landwirtschaftlichen Aufgaben ist dies jedoch ungleich schwieriger. Beispielsweise beim Zetten gibt es keinen schmalen Schwad, der erfasst werden müsste, sondern einen ausgebreiteten Futterteppich, bei dem die Grenze zwischen schon aufgelockertem, gewendetem Erntegut und dem noch unbearbeiteten, dichteren und stärker zusammengesackten Erntegut zu unterscheiden wäre, um beispielsweise eine Lenkhilfe für die Lenkung des Schleppers geben zu können, d.h. an der besagten Bearbeitungskante entlangfahren zu können.

Eine weitere Schwierigkeit besteht darin, dass die für die jeweilige landwirtschaftliche Aufgabe zu erfassende Boden- bzw. Erntegutkontur in verschiedenen Bereichen angeordnet sein kann. Beispielsweise liegt die zu beobachtende Schnittkante beim Mähen üblicherweise deutlich zur Seite versetzt neben dem Schlepper, während der für eine Ballenpresse oder einen Ladewagen zu erfassende Erntegutschwad üblicherweise zentral in der Fahrspur des Schleppers liegt. Wird der Abtastbereich der Lasermessvorrichtung ausreichend breit eingestellt, um diese für verschiedene Aufgaben verschieden positionierten Boden- bzw. Erntegutkonturen erfassen zu können, fallen sehr große Datenmengen an, die von der Auswerteeinrichtung verarbeitet werden müssen. Hierdurch leidet die Erfassungsgeschwindigkeit, so dass bei höheren Fahrgeschwindigkeiten kein ausreichend schnelles Eingreifen in die Lenkung des Schleppers oder die Steuerung der Betriebsparameter des Anbaugeräts gewährleistet werden kann. Wird, um hier Abhilfe zu schaffen, der Abtastbereich weiter nach vorne, d.h. mit größerem Frontabstand, eingestellt, ergibt sich bei begrenzter Anbringungshöhe der Lasermessvorrichtung ein sehr flacher Abtastwinkel gegenüber der Horizontalen, wodurch die abgetasteten Konturen ähnlich einem zu schrägen Schnitt stark verzerrt werden. Zudem ergeben sich unerwünschte Ungenauigkeiten bei der Laufzeitmessung. Aus der Schrift EP 1266554A2 ist ein landwirtschaftliches Arbeitsfahrzeug mit einem Lasersensor zum Abtasten des Bodens bekannt, bei dem der Abtastbereich des Lasersensors in Abhängigkeit von einer Seite, auf der sich die Bearbeitunggrenze der Bearbeitungswerkzeuge befindet, gesteuert wird. Zusätzlich wird die Breite des Bearbeitungswerkzeugs und die Fahrgeschwindigkeit berücksichtigt, um den Abtastbereich des Lasersensors möglichst klein halten zu können.

Der vorliegenden Erfindung liegt daher die Aufgabe zugrunde, eine verbesserte landwirtschaftliche Maschine der genannten Art zu schaffen, die Nachteile des Standes der Technik vermeidet und Letzteren in vorteilhafter Weise weiterbildet. Insbesondere soll eine verbesserte Boden- bzw. Erntegutkontur-Abtastung mittels Laserstrahl erreicht werden, die einen ausreichend großen Abtastbereich besitzt, um für verschiedene Anbaugeräte verschieden ausgebildete und positionierte Boden- bzw. Erntegutkonturen präzise erfassen zu können, ohne hierbei übermäßige Datenmengen anfallen zu lassen.

Erfindungsgemäß wird diese Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, den Abtastbereich der Lasermessvorrichtung individuell an das jeweils angebaute Anbaugerät anzupassen. Anstatt einen übermäßig großen, für alle Anbaugeräte und deren relevanten Boden- und Erntegutkonturen passenden Abtastbereich vorzusehen, wird mit kleineren Abtastbereichen gearbeitet, die jeweils für das angebaute Anbaugerät passend hinsichtlich Lage und Größe adaptiert sind. Erfindungsgemäß ist eine Erfassungsvorrichtung zur Erfassung des jeweils an die Anbauvorrichtung angebauten Anbaugeräts vorgesehen, wobei von einer Einstellvorrichtung der Abtastbereich der Lasermessvorrichtung in Abhängigkeit des jeweils erfassten Anbaugeräts eingestellt wird. Der Lasermessvorrichtung ist ein intelligentes Steuerungssystem zugeordnet, welches für verschiedene Anbaugeräte weiß, wo jeweils der zu beobachtende Bodenkonturabschnitt liegt und die Lasermessvorrichtung hinsichtlich ihres Abtastbereichs entsprechend ansteuert, so dass der Abtastbereich gezielt für das jeweilige Anbaugerät passt. Erfindungsgemäß passt eine Auswertevorrichtung zur Auswertung der von der Lasermessvorrichtung bereit gestellten Abtastdaten die Datenauswertung individuell an das jeweils erfasste Anbaugerät an und wählt aus verschiedenen, vorbestimmten Auswertemodi nur den Auswertemodus oder nur die Auswertemodi aus, die für das jeweils identifizierte Anbaugerät passend sind.

Vorteilhafterweise kann ein Datenbus vorgesehen sein, mittels dessen Anbaugeräte-Identifikationsdaten und Einstellungsdaten übertragen werden können. Insbesondere können die Erfassungsvorrichtung zur Erfassung des jeweils angebauten Anbaugeräts, die Einstellvorrichtung zur Einstellung des Abtastbereiches der Lasermessvorrichtung und das Steuerungssystem miteinander per Datenbus kommunizieren.

Die Erfassung des jeweiligen Anbaugeräts für die Voreinstellung des Abtastbereichs der Lasermessvorrichtung kann grundsätzlich in verschiedener Art und Weise erfolgen. In vorteilhafter Weiterbildung der Erfindung kann die Erfassung berührungslos erfolgen, wobei die Erfassungsvorrichtung ein Lesegerät zum Auslesen eines am Anbaugerät anbringbaren Datenspeichers beispielsweise in Form eines Transponderchips besitzen kann, wobei in besagtem Datenspeicher Anbaugeräte-Identifikationsdaten und/oder Einstelldaten für die Lasermessvorrichtung gespeichert sein können. Wird das Anbaugerät an die Anbauvorrichtung angedockt, werden die Daten von dem am Anbaugerät vorgesehenen Datenspeicher an das Lesegerät übertragen, wobei anhand der übertragenen Identifikationsdaten und/oder Einstelldaten die Einstellvorrichtung den Abtastbereich der Lasermessvorrichtung entsprechend voreinstellt. Alternativ oder zusätzlich zu einem solchen Transponderchip kann beispielsweise auch ein Barcodeleser vorgesehen sein, der einen am Anbaugerät angebrachten Barcode einlesen kann. Grundsätzlich können auch andere Datenspeicher- und Übertragungsmittel vorgesehen sein. Alternativ oder zusätzlich zu einer solchen vollautomatischen Datenübertragung kann auch eine manuelle oder halbautomatische Anbaugeräteerfassung vorgesehen sein, beispielsweise dergestalt, dass die Einstellvorrichtung zur Einstellung des Abtastbereiches der Lasermessvorrichtung eine Eingabevorrichtung beispielsweise in Form eines Touchscreens, eines Keyboards oder auch eines Magnetstreifenlesers aufweist, in den eine Datenkarte eingesteckt bzw. an dem eine solche Datenkarte vorbeigezogen werden muss. Eine solche manuelle Eingabemöglichkeit für die Anbaugeräte-Identifikationsdaten kann auch zusätzlich der vorbeschriebenen automatischen Erfassung vorgesehen sein, beispielsweise um bei Datenübertragungsproblemen trotzdem eine Voreinstellung des Laserabtastbereiches vornehmen zu können.

Die Voreinstellung des Laserstrahl-Abtastbereiches kann grundsätzlich in verschiedener Art und Weise erfolgen. Je nach Ausbildung des Laserscanners kann es beispielsweise vorteilhaft sein, einen horizontalen und/oder vertikalen Winkelbereich, in dem die Lasermessvorrichtung den Boden bzw. Erntegutteppich abscannt, einzuschränken, um nicht verwertbare Bereiche auszublenden und hierdurch die Datenmenge signifikant zu reduzieren. Die Einschränkung der Abtastwinkelbereiche bzw. die Ausblendung nicht brauchbarer Bereiche kann vorteilhafterweise softwaremäßig erfolgen, beispielsweise durch Ausblendung bzw. Ausfilterung der in einem nicht benötigten Bereich bereitgestellten Scandaten. Hierdurch kann Rechenzeit und Buskapazität eingespart werden.

Wird beispielsweise eine Lasermessvorrichtung verwendet, die mit einem Abtastwinkel von 70° arbeitet und durch kippbare Spiegel verschiedene Neigungswinkel zur Horizontalen aufnehmen kann, kann beispielsweise softwaremäßig von dem genannten Abtastwinkelbereich von beispielsweise 70° nur ein Ausschnitt von beispielsweise 35° verwendet werden und von den mehreren horizontalen Abtastwinkeln beispielsweise nur einer für die Auswertung herangezogen werden, während der Rest ausgeblendet bzw. ausgefiltert wird.

Alternativ oder zusätzlich kann jedoch auch vorgesehen sein, nicht nur innerhalb eines vorgegebenen Abtastspektrums durch Ausblenden Unterbereiche auszuwählen, sondern auch darüber hinaus die Abtastspektren frei festzulegen bzw. über die voreingestellten Spektren hinauszugehen, beispielsweise dadurch, dass die Verkippung der Spiegel in der gewünschten Weise eingestellt wird.

In Weiterbildung der Erfindung kann von der Einstellvorrichtung in Abhängigkeit des jeweils erfassten Anbaugeräts der Neigungswinkel des Laserstrahls gegenüber der Horizontalen variiert werden derart, dass der Abtastbereich für ein mit größerer Fahrgeschwindigkeit betriebenes Anbaugerät in Fahrtrichtung betrachtet weiter vorne liegend und für ein mit kleinerer Fahrgeschwindigkeit betriebenes Anbaugerät weniger weit vorne liegend angeordnet wird. Wird beispielsweise ein Ladewagen I angebaut, mit dem recht schnell gefahren werden kann, wird die Lasermessvor richtung entsprechend voreingestellt, um mit dem Laserstrahl relativ weit nach vorne zu blicken und einen relativ weit vor der Maschine liegenden Schwadabschnitt abzutasten. Wird andererseits beispielsweise eine Ballenpresse angebaut, die beispielsweise aufgrund eines älteren Modells langsamer zu betreiben ist, wird anhand der erfassten Daten der Ballenpresse die Lasermessvorrichtung derart voreingestellt, dass der Abtastbereich näher am Schlepper bzw. weniger weit vor dem Schlepper liegt, um bei ausreichender Vorlaufzeit eine höhere Genauigkeit der Konturabtastung zu erreichen.

Alternativ oder zusätzlich kann der Abtastbereich der Lasermessvorrichtung auch hinsichtlich seiner Abtastbreite und/oder hinsichtlich seiner Lage quer zur Fahrspur unterschiedlich voreingestellt werden, je nachdem, welches Anbaugerät genutzt wird. Wird beispielsweise ein Ladewagen angebaut, der eine große Aufnahmebreite an der Pickup besitzt, kann die Lasermessvorrichtung derart voreingestellt werden, dass ein relativ breiter Bereich in der Fahrspur vor dem Schlepper bzw. Ladewagen von der Lasermessvorrichtung erfasst wird. Da ein entsprechend breiter Schwad üblicherweise in der Fahrspur des Schleppers liegt, wird der Abtaststrahl der Lasermessvorrichtung über eine recht große Breite hin- und hergeführt, wobei der Abtastbereich im Wesentlichen in der Fahrspur des Schleppers vorgesehen wird. Wird andererseits beispielsweise ein Mähwerk angebaut, gilt es, die Bestandskante des noch ungemähten Ernteguts zu erfassen, die üblicherweise präzise begrenzt ist, d.h. sich nicht über eine große Breite erstreckt, und andererseits üblicherweise seitlich neben der Fahrspur des Schleppers liegt. Bei Erfassung eines entsprechenden Mähwerks als genutztes Anbaugerät kann aufgrund der bekannten Mähwerksbreite und dessen seitlicher Ausladung relativ zur Schlepperfahrspur der seitlich neben der Fahrspur des Schleppers liegende Bereich bestimmt werden, in dem die Bestandskante liegen muss, wenn der Schlepper auf Anschluss fährt, d.h. so fährt, dass unter möglichst großer Ausnutzung der Arbeitsbreite der Mähmaschine ohne Stehenlassen von Erntegut eine Bahn gemäht wird.

In vorteilhafter Weiterbildung der Erfindung muss die Lasermessvorrichtung hierbei nicht zwangsweise auf eine jeweils gerade zu bearbeitende Boden- bzw. Erntegutkontur gerichtet werden. Je nach genutztem Anbaugerät kann es auch vorteilhaft sein, wenn die Lasermessvorrichtung so eingestellt wird, dass ein an sich gar nicht zu bearbeitender Feldabschnitt abgetastet wird, insbesondere ein neben der bearbeiteten Fahrgasse liegender Feldabschnitt, der zuvor in einer vorhergehenden Fahrgasse bereits bearbeitet wurde. Dort finden sich nämlich häufig leichter zu erfassende Konturen, beispielsweise dann, wenn Erntegut in einem Schwad abgelegt wurde. In vorteilhafter Weiterbildung der Erfindung kann in Abhängigkeit des erfassten Anbaugeräts der Abtastbereich außerhalb der Fahrspur und/oder außerhalb der Arbeitsbreite der Maschine auf ein bereits bearbeitetes Flächenstück gerichtet werden, in dem eine Bearbeitungskontur aus einer früheren Fahrgasse angeordnet ist, wobei vorteilhafterweise die Größe des Querversatzes des Abtastbereiches von der Mitte der Fahrspur der Maschine weg in Abhängigkeit des jeweils erfassten Anbaugeräts eingestellt wird. Vorteilhafterweise beinhalten die erfassten Identifikationsdaten und/oder Einstelldaten für das jeweilige Anbaugerät Angaben über die Arbeitsbreite und/oder die seitliche Ausladung des jeweiligen Anbaugeräts, so dass die Steuerung für die Lasermessvorrichtung weiß, wie weit bei korrektem Anschlussfahren eine zuvor erzeugte Erntegutkontur beispielsweise in Form eines Schwads oder eine erzeugte Bodenkontur beispielsweise in Form einer Ackerfurche seitlich beabstandet angeordnet sein müsste. Alternativ oder zusätzlich kann auch die Breite des Abtastbereiches entsprechend voreingestellt werden. Wird beispielsweise ein Schwader angebaut, kann aus der erfassten Arbeitsbreite des Schwaders und der bekannten, üblichen abgelegten Schwadposition die Lasermessvorrichtung den Bereich erfassen, in dem ein auf der zuvor befahrenen Fahrgasse abgelegter Schwad liegt, da die Steuerung weiß, wie weit seitlich der Schwad liegen muss, wenn korrekt auf Anschluss gefahren wird.

Um die Datenmenge für die Auswertung der Lasersignale und deren Laufzeit klein zu halten, kann in Weiterbildung der Erfindung vorteilhafterweise vorgesehen sein, dass der Abtastbereich in Abhängigkeit des jeweils erfassten Anbaugeräts auf eine Abtastbreite eingestellt wird, die weniger als 150 % der Arbeitsbreite des Anbaugeräts beträgt. Je nach Anbaugerät kann die Abtastbreite auch auf weniger als 75 % der Arbeitsbreite des angebauten Anbaugeräts eingestellt werden. Wird beispielsweise ein Ladewagen angebaut, wird die Abtastbreite des Laserstrahls vorteilhafterweise auf einen Bereich von etwa 100 % bis 150 % der Breite der Pickup des Ladewagens eingestellt, da hier entsprechend breite Erntegutschwade aufgenommen werden können. Wird andererseits beispielsweise bei einem angebauten Mähwerk die Bestandskante des noch ungemähten Ernteguts erfasst, kann die Abtastbreite deutlich kleiner als die Arbeitsbreite der Mähmaschine eingestellt werden, da die Bestandskante üblicherweise scharf abgegrenzt ist und auch hinsichtlich ihrer Lage nur in einem kleinen Bereich variieren kann, der nur einen Bruchteil der Arbeitsbreite der Mähmaschine beträgt. Beispielsweise kann es bei Mähmaschinen oder auch anderen Anbaugeräten, bei denen nur eine relativ schmale Boden- bzw. Erntegutkontur abzutasten ist, ausreichend sein, die Abtastbreite des Laserstrahls auf weniger als 50 % der Arbeitsbreite der Anbaumaschine einzustellen.

Die Einstellvorrichtung zur Einstellung des Abtastbereiches der Lasermessvorrichtung kann die Voreinstellungen grundsätzlich in verschiedener Art und Weise bestimmen. Beispielsweise können die Abtastbereiche aus den Identifikationsdaten und damit verbundenen Angaben zur Arbeitsbreite des jeweiligen Anbaugeräts berechnet werden. Alternativ oder zusätzlich kann die Einstellvorrichtung aber auch einen Datenspeicher aufweisen bzw. mit einem solchen Datenspeicher per Daten-übertragungsvorrichtung verbindbar sein, um aus dem genannten Datenspeicher für ein jeweiliges Anbaugerät zugehörige Voreinstellungsdaten auszulesen und für die Einstellung des Abtastbereichs zu verwenden. In dem genannten Datenspeicher sind hierbei vorteilhafterweise ähnlich einer Bibliothek eine Mehrzahl von Datensätzen für die genannten Voreinstellungsdaten von verschiedenen Anbaugeräten speicherbar, so dass dann, wenn ein jeweils angekoppeltes Anbaugerät erfasst ist, aus dem Datenspeicher nur die passenden Voreinstellungsdaten ausgelesen werden müssen, um den Abtastbereich der Lasermessvorrichtung für das jeweilige Anbaugerät richtig einzustellen.

Die von der Lasermessvorrichtung bestimmte Boden- bzw. Erntegutkontur, deren Größe und/oder deren Lage kann grundsätzlich für verschiedene Steuerungsaufgaben verwendet werden. In vorteilhafter Weiterbildung der Erfindung kann hierbei eine Lenkhilfevorrichtung vorgesehen sein, die in Abhängigkeit der von der Lasermessvorrichtung jeweils bestimmten Boden- bzw. Erntegutkontur und deren Lage relativ zur landwirtschaftlichen Maschine ein Lenksignal bereitstellt, um an der genannten Boden- bzw. Erntegutkontur entlangfahren zu können. Das genannte Lenksignal kann hierbei bei halbautomatischer Lenkhilfevorrichtung beispielsweise ein auf einem Display angezeigtes Signal beispielsweise in Form eines nach rechts oder links weisenden Pfeiles sein, anhand dessen der Schlepperführer sieht, ob er nach rechts oder links lenken muss. Alternativ oder zusätzlich kann das Lenksignal auch ein Ansteuersignal für eine automatisch arbeitende Lenkvorrichtung sein, die den Lenkeinschlag der landwirtschaftlichen Maschine in Abhängigkeit des genannten Lenksignals automatisch steuert.

Die Lenkhilfevorrichtung umfasst hierbei vorteilhafterweise eine Auswerteeinrichtung, die in Abhängigkeit des jeweils erfassten Anbaugeräts und dessen Arbeitsbreite sowie der erfassten Lage der Boden- bzw. Erntegutkontur das Lenksignal generiert. Vorteilhafterweise kann hierbei in der vorgenannten Weise eine Bearbeitungskante aus einem bereits bearbeiteten Flächenstück des Feldes aus einer früheren Fahrgasse abgetastet und herangezogen werden. Beispielsweise kann bei Anbau eines Schwaders ein in einer vorherigen Fahrgasse abgelegter Schwad, der bei Befahren der aktuellen Fahrgasse neben der landwirtschaftlichen Maschine und deren Arbeitsbreite liegt, erfasst und für das Lenksignal herangezogen werden, so dass die landwirtschaftliche Maschine in einem vorbestimmten Abstand seitlich neben dem genannten Schwad entlangfährt. Ähnlich kann bei Anbau eines Zetters der aufgelockerte Erntegutteppich abgetastet werden, der in einer vorherigen Fahrgasse aufgelockert wurde, wobei insbesondere der Übergang zwischen dem schon aufgelockerten Futterteppichbereich und dem noch nicht aufgelockerten Futterteppichbereich bestimmt werden kann. Das Lenksignal kann hieraus derart generiert werden, dass die aktuelle Fahrgasse so gelegt wird, dass die Arbeitsbreite des Zetters geringfügig mit dem schon aufgelockerten Bereich überlappt, um einerseits die Arbeitsbreite des Zetters möglichst vollständig zu nutzen, andererseits jedoch ein vollständiges Zetten ohne unbearbeitete Übergangsbereiche zu erreichen.

Alternativ oder zusätzlich zu einer solchen Lenkhilfe kann die variable Lasermessvorrichtung auch dazu genutzt werden, in Abhängigkeit der erfassten Boden - und/oder Erntegutkontur, deren Größe und/oder Beschaffenheit und/oder Lage zumindest einen weiteren Maschinen- oder Anbaugeräte-Betriebsparameter zu steuern, beispielsweise eine Drehgeschwindigkeit eines Arbeitsrotors, eine Arbeitshöhe eines Arbeitsaggregats oder die Leistungszufuhr zu einem Antrieb oder die Fahrgeschwindigkeit.

Vorteilhafterweise kann in Abhängigkeit des jeweils erfassten bzw. identifizierten Anbaugerätes die Auswertung der von der Lasermessvorrichtung bereitgestellten Daten und die hieraus abgeleiteten Funktionen und Befehle variiert werden. Wird beispielsweise als Anbaugerät ein Ladewagen vorgesehen, kann eine Auswerteeinheit der Steuervorrichtung die von der Lasermessvorrichtung bereitgestellten Daten dahingehend auswerten, dass eine Schwadkontur bestimmt wird und/oder das Querschnittsprofil der abgescannten Erntegutbereiche, beispielsweise um in Abhängigkeit hiervon die Leistung und Aufnahmegeschwindigkeit der Pickup des Ladewagens anzupassen. Wird indes beispielsweise ein Mähwerk angebaut, ist die Kontur des Ernteguts bzw. dessen Querschnittsprofil weniger interessant, so dass die Auswerteeinheit von der Erfassungsvorrichtung dahingehend informiert werden kann, dass die Datenauswertung hinsichtlich des Konturprofils unterlassen wird und stattdessen nur eine Mähkante und/oder die Grashöhe bestimmt wird. Durch die jeweils individuell an das Anbaugerät angepasste Auswertung der von der Lasermessvorrichtung erfassten und bereitgestellten Daten und/oder der hieraus abgeleiteten Funktionen und Steuerungsbefehle wie beispielsweise Lenkhilfesignale oder Steuerbefehle zur Einstellung der angebauten Anbaugeräte können die durchzuführenden Rechenoperationen und die benötigten Datenkapazitäten signifikant reduziert werden.

Die Erfindung wird nachfolgend anhand eines bevorzugten Ausführungsbeispiels und zugehöriger Zeichnungen näher erläutert. In den Zeichnungen zeigen:

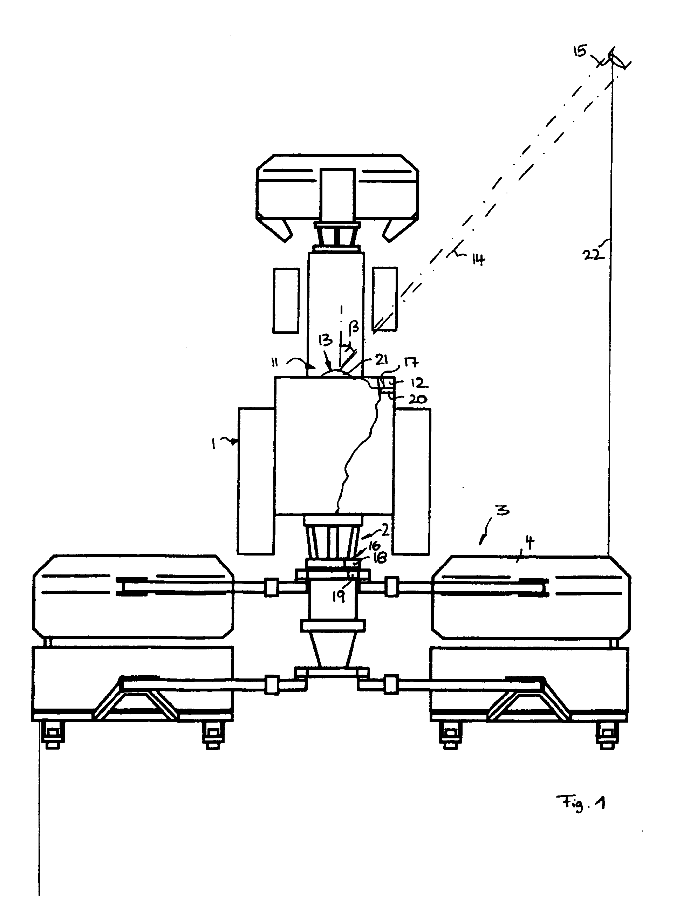

- Fig. 1:: eine schematische Draufsicht auf eine landwirtschaftliche Maschine in Form eines Schleppers mit einer daran angebauten Mähwerkskombination, wobei die am Schlepper angebrachte Lasermessvorrichtung mit ihrem Abtastbereich eine seitlich neben dem Schlepper liegende Bestandskante des noch ungemähten Ernteguts abtastet,

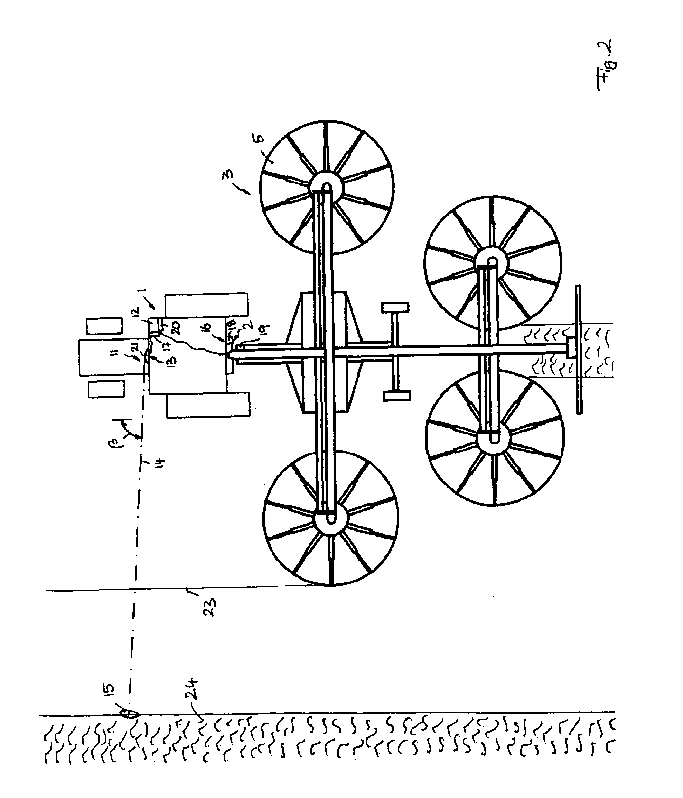

- Fig. 2:: eine schematische Draufsicht auf die landwirtschaftliche Maschine aus Fig. 1, wobei in diesem Fall ein Schwader als Anbaugerät angebaut ist und die Lasermessvorrichtung einen bereits abgelegten Schwad seitlich neben der zu bearbeitenden Fahrgasse erfasst,

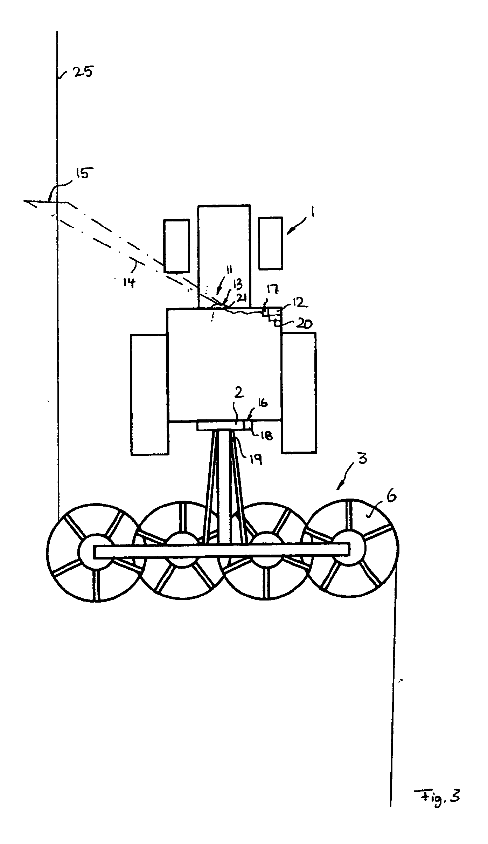

- Fig. 3 :: eine schematische Draufsicht auf die landwirtschaftliche Maschine aus den vorhergehenden Figuren, wobei in diesem Fall als Anbaugerät ein Zetter als Anbaugerät angebaut ist und die Lasermessvorrichtung einen Übergangsbereich des schon aufgelockerten Futtergutteppichs aus der vorangehenden Fahrgasse und den noch nicht aufgelockerten Futtergutteppich der aktuellen Fahrgasse abtastet,

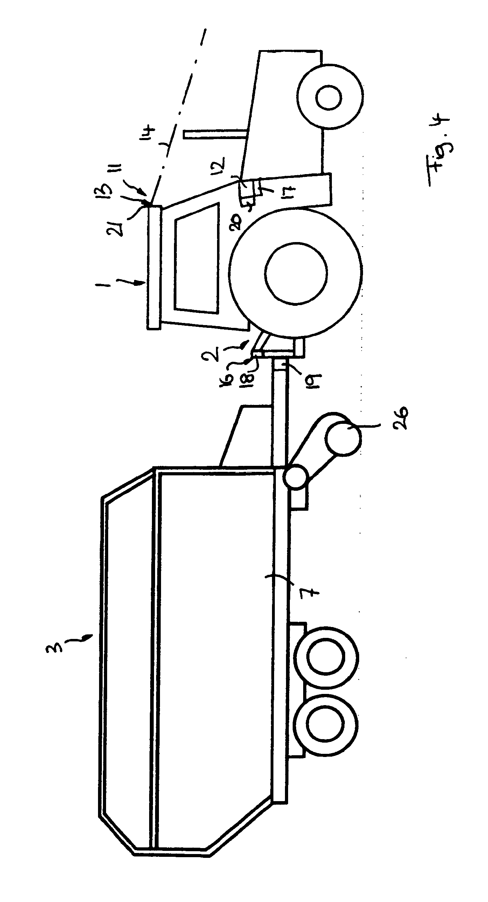

- Fig. 4:: eine schematische Seitenansicht der landwirtschaftlichen Maschine aus den vorhergehenden Figuren, wobei in diesem Fall ein Ladewagen als Anbaugerät angebaut ist und die Lasermessvorrichtung einen in der Fahrspur des Schleppers liegenden Schwad abtastet, und

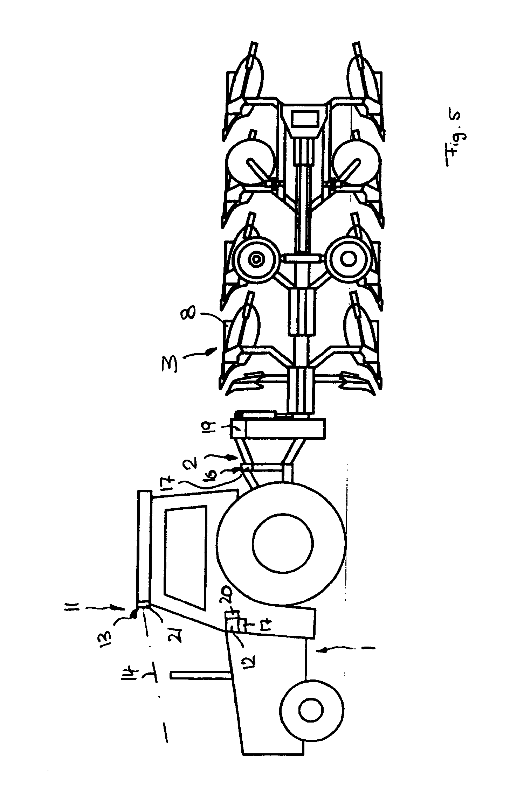

- Fig. 5:: eine schematische Seitenansicht der landwirtschaftlichen Maschine aus den vorhergehenden Figuren, wobei in diesem Fall ein Wendepflug als Anbaugerät angebaut ist und die Lasermessvorrichtung den Übergangsbereich zwischen schon eingebrachten Ackerfurchen und noch unbeackertem Bodenbereich abtastet, wobei die Lasermessvorrichtung den Abtastbereich je nach Wendestellung des Wendepflugs einmal nach rechts versetzt und einmal nach links versetzt vorsieht.

Wie Fig. 1 zeigt, kann die landwirtschaftliche Maschine einen Schlepper 1 umfassen, der eine Anbauvorrichtung 2 besitzt, um diverse Anbaugeräte 3 anbauen zu können. Wie Fig. 1 zeigt, kann die Anbauvorrichtung 2 sowohl heckseitig als auch frontseitig jeweils eine Anbaueinheit beispielsweise in Form einer Dreipunktanlenkung umfassen, um sowohl heckseitig als auch frontseitig Anbaugeräte anbauen zu können. In der gezeichneten Ausführung nach Fig. 1 umfasst das Anbaugerät 3 hierbei eine Mähmaschine 4, die ein frontseitig angebautes Frontmähwerk sowie zwei heckseitig angebaute, seitlich auskragende Heckmähwerke umfasst. Den heckseitigen Mähwerken können hierbei Konditionierer oder eine Querfördereinrichtung zugeordnet sein, um das von den seitlichen Mähwerke abgemähte Erntegut quer zu einem zentralen Schwad hin ablegen zu können.

An dem Schlepper 1 ist hierbei vorteilhafterweise eine Erfassungsvorrichtung 16 vorgesehen, die selbsttätige erfasst, welches Anbaugerät an den Schlepper 1 angebaut ist. Die genannte Erfassungsvorrichtung 16 kann hierbei eine berührungslos, beispielsweise im Radiofrequenzbereich arbeitende Sende- /Empfangseinrichtung mit einem Lesegerät 18 umfassen, um aus einem Datenspeicher 19, der an dem Anbaugerät 3 angebracht ist, Daten auslesen zu können, um das genannte Gerät zu identifizieren und/oder verschiedene Betriebsparameter in Abhängigkeit der ausgelesenen Daten einstellen zu können. Der genannte Datenspeicher 19 kann hierbei beispielsweise ein Transponderchip sein, der mit dem genannten Lesegerät 18 kommuniziert, welches vorteilhafterweise im Bereich der Anbauvorrichtung 2 angebracht sein kann. In dem Datenspeicher 19, der an dem Anbaugerät 3 angebracht ist, können insbesondere Anbaugeräte-Identifikationsdaten gespeichert sein, die Geometriedaten zu dem jeweiligen Anbaugerät wie beispielsweise dessen Arbeitsbreite, dessen seitliche Ausladung oder auch betriebstypische Parameter wie übliche Arbeitsgeschwindigkeit oder Ablagebereich beispielsweise eines abzulegenden Schwads umfassen können. Alternativ oder zusätzlich können in dem genannten Datenspeicher 19 Einstellungsdaten bzw. Steuerungsdaten gespeichert sein, die für die Voreinstellung diverser Betriebsparameter an dem Schlepper 1 und/oder dem Anbaugerät 3 genutzt werden können, insbesondere für die Voreinstellung einer Lasermessvorrichtung 13, die an dem Schlepper 1 angebracht sein kann.

Wie Fig. 1 in Verbindung mit Fig. 4 zeigt, kann die Lasermessvorrichtung 13 an einem Aufbau des Schleppers 1 angebracht sein, beispielsweise am Dach der Schlepperführerkabine, wobei die Anordnung vorteilhafterweise derart getroffen ist, dass die Lasermessvorrichtung 13 sowohl nach vorne auf die Fahrbahn vor dem Schlepper 1 blicken kann, als auch zur Seite hin auf Bodenabschnitte, die seitlich rechts und links neben der Fahrspur des Schleppers 1 liegen.

Die Lasermessvorrichtung 13 kann hierbei mit nur einem Laserkopf 21 arbeiten, wobei diesem Laserkopf 21 vorteilhafterweise eine Umlenkvorrichtung beispielsweise in Form eines kipp- und/oder schwenkbaren Spiegels zugeordnet sein kann, um den von dem Laserkopf 21 abgegebenen Laserstrahl in verschiedene Richtungen lenken zu können. Alternativ oder zusätzlich kann die Lasermessvorrichtung 13 auch mehrere Laserköpfe 21 umfassen, die vorteilhafterweise in verschiedene Richtungen blicken, um verschiedene Bodenabschnitte vor und seitlich neben dem Schlepper 1 abtasten zu können. Gegebenenfalls kann auch hier einem oder allen der Laserköpfe eine Umlenkvorrichtung der genannten Art zugeordnet sein, um den jeweils abgegebenen Laserstrahl 14 in die gewünschte Richtung bzw. in verschiedene Richtungen lenken zu können.

Die Lasermessvorrichtung 13 umfasst weiterhin in an sich bekannter Weise einen Laufzeitmesser, der von dem jeweiligen Konturpunkt reflektierte Laserstrahlung erfasst und die Laufzeit des Laserstrahls vom Laserkopf 21 zu dem Konturpunkt bzw. vom Konturpunkt zum genannten Laserkopf 21 bestimmt und hieraus die Entfernung des Konturpunkts bestimmt. Vorteilhafterweise kann der genannte Laserstrahl 14 hierbei über einen Abtastbereich 15 hin- und hergeführt werden, beispielsweise in einer Ebene von rechts nach links und zurück verschwenkt werden oder entlang eines Kreises bzw. eines Ovals oder einer Ellipse zyklisch hin- und hergeführt werden, um einen bestimmten, begrenzten Bereich des Bodens oder des darauf angeordneten Ernteguts abzutasten. Vorteilhafterweise ist der Laserstrahl 14 hierbei gegenüber einer horizontalen Ebene schräg nach unten/vorne geneigt, wie dies Fig. 4 zeigt, wobei der Neigungswinkel α gegenüber der Horizontalen vorteilhafterweise verändert werden kann, um verschieden weit vor dem Schlepper 1 oder verschieden weit von diesem entfernt liegende seitliche Feldabschnitte abtasten zu können. Weiterhin kann der seitliche Auslenkungswinkel β des Laserstrahls 14 gegenüber einer vertikalen, die Fahrtrichtung beinhaltenden Ebene ebenfalls variiert werden, um den Laserstrahl 14 in der genannten Weise hin- und herführen zu können, aber auch auf verschiedene, d.h. quer zur Fahrtrichtung unterschiedlich weit seitlich beabstandete Bodenabschnitte abtasten zu können.

Der Abtastbereich 15 der Lasermessvorrichtung 13 wird hierbei vorteilhafterweise in Abhängigkeit des jeweiligen Anbaugeräts 3 voreingestellt, das von der vorgenannten Erfassungsvorrichtung 16 am Schlepper 1 erkannt wird. Die hierzu der Lasermessvorrichtung 13 zugeordnete Einstellvorrichtung 17 stellt vorteilhafterweise automatisch für verschiedene, jeweils erkannte Anbaugeräte 3 verschiedene Abtastbereiche 15 ein.

Ist beispielsweise, wie Fig. 1 zeigt, eine Mähmaschine 4 als Anbaugerät 3 angebaut, stellt die Einstellvorrichtung 17 den Abtastbereich 15 derart ein, dass ein Feldabschnitt abgetastet wird, der seitlich neben dem Schlepper 1 außerhalb von dessen Fahrspur liegt, wobei vorteilhafterweise, wie dies Fig. 1 zeigt, ein Feldabschnitt abgetastet werden kann, der ein Stück weit vor dem Schlepper 1 liegt, um ausreichende Reaktionszeit für die Steuerung des Schleppers und des Anbaugeräts 3 zu haben. Insbesondere wird der Abtastbereich 15 so eingestellt, dass eine Bestandskante 22 abgetastet wird, die einen noch nicht gemähten Erntegutbereich von einem schon umgemähten Erntegutbereich trennt. In dem voreingestellten Abtastbereich 15 wird der Laserstrahl 14 dann vorteilhafterweise in der beschriebenen Weise hin- und hergeführt, um die Bestandskante abzutasten und deren Lage zu bestimmen. Beispielsweise kann hier der Laserstrahl 14 durch Variation des vorgenannten Winkels β und/oder durch Variation des Neigungswinkels α hin- und hergeführt werden.

Der Querversatz des Abtastbereiches 15 wird hierbei in Abhängigkeit der ausgelesenen Arbeitsbreite der Mähmaschine 4 derart bestimmt, dass ein Bereich abgetastet wird, in dem die genannte Bestandskante 22 bei einigermaßenem Anschlussfahren seitlich von der Fahrspur des Schleppers 1 beabstandet liegen müsste, vgl. Fig. 1.

Wird indes, wie Fig. 2 zeigt, ein Schwader 5 als Anbaugerät 3 angebaut und von der Erfassungsrichtung 16 an der Anbauvorrichtung 2 erfasst, stellt die Einstellvorrichtung 17 den Abtastbereich 15 der Lasermessvorrichtung 13 unterschiedlich ein. Beispielsweise könnte der Laserstrahl 14 hier auf die Futterteppichkante 23 gerichtet werden, die den noch mit Erntegut belegten Bereich des Feldes von dem Bereich des Feldes trennt, in dem das Futtergut schon weggerecht wurde. Vorteilhafterweise jedoch sieht die Einstellvorrichtung 17 eine Voreinstellung für den Abtastbereich 15 vor, der in einem Feldbereich außerhalb der Arbeitsbreite bzw. Fahrspur des Schwaders 5 liegt, insbesondere derart, dass ein Schwad 24, der in einer vorherigen, benachbarten Fahrgasse abgelegt wurde, abgetastet wird. Die Abtastung des dort abgelegten Schwades 24 ist deutlich leichter auszuwerten als ein ggf. nur geringfügiger Übergang eines dünnen Futterteppichs zu einem zusammengerechten Grasnabenbereich. Aus dem Datenspeicher 19 des Schwaders 5 weiß die Einstellvorrichtung 17 einerseits, wie groß die Arbeitsbreite des Schwaders 5 ist und andererseits, in welchem Bereich der Schwad 24 abgelegt wird. Mit anderen Worten weiß die Einstellvorrichtung 17, wie weit der zu erfassende Schwad 24 näherungsweise von der Fahrspur des Schleppers und damit der Lasermessvorrichtung 13 quer beabstandet ist, wenn näherungsweise auf Anschluss gefahren wird, so dass der Abtastbereich 15 entsprechend festgelegt werden kann.

Der Abtastbereich 15 kann hierbei in Fahrrichtung betrachtet auf Höhe des Schleppers 1 eingestellt sein, ggf. aber auch ein Stück weit voraus angeordnet sein, um genügend Reaktionszeit für die Steuerung zu haben.

Aus dem erfassten Schwad 24 und dessen Lage relativ zum Schlepper 1 sowie den bekannten Daten zur Geometrie des Anbaugeräts 3 kann eine dem Schlepper 1 zugeordnete Lenkhilfevorrichtung 20 ein Lenksignal generieren, um den Schlepper 1 in einem vorbestimmten Abstand an dem erfassten Schwad 24 entlang zu führen und hierdurch den noch unbearbeiteten Feldbereich exakt unter näherungsweise voller Ausnutzung der Arbeitsbreite des Schwaders 5 zu bearbeiten.

Wie Fig. 3 zeigt, kann bei Anbau eines Zetters 6 an den Schlepper 1 wiederum ein verschieden positionierter Abtastbereich 15 der Lasermessvorrichtung 13 voreingestellt werden, wofür wiederum aus einem dem Zetter 6 zugeordneten Datenspeicher 19 von der Erfassungsvorrichtung 16 entsprechende Identifikationsdaten bzw. Voreinstelldaten ausgelesen werden. Anhand des erkannten Zetters 6 stellt die Einstellvorrichtung 17 automatisch den Abtastbereich 15 des Laserstrahls 14 auf einen schräg vorne und seitlich neben dem Schlepper 1 außerhalb von dessen Fahrspur liegenden Bodenbereich als Abtastbereich ein, insbesondere derart, dass der Übergangsbereich von bereits gewendetem Erntegut zu einem noch nicht gewendeten Erntegutbereich abgetastet wird. Der bereits bearbeitete Erntegutteppich zeichnet sich durch die erfolgte Auflockerung im Vergleich zu dem noch unbearbeiteten Erntegutteppich üblicherweise dadurch aus, dass die Höhe der Oberfläche des Erntegutteppichs größer ist als die Höhe der noch unbearbeiteten Oberfläche. Durch Abtasten des voreingestellten Abtastbereichs 15 kann dieser Höhenunterschied von der Lasermessvorrichtung 13 erfasst werden. Die hieraus bestimmte Lage der Übergangskante relativ zum Schlepper 1, insbesondere der Querabstand der Bearbeitungskante kann zusammen mit der aus dem Datenspeicher 19 ausgelesenen Arbeitsbreite des Zetters 6 von der Lenkhilfevorrichtung 20 dazu genutzt werden, ein entsprechendes Lenksignal bereitzustellen, um den Schlepper 1 parallel zu der Übergangskante 25 zu führen, so dass der Zetter 6 unter Ausnutzung im Wesentlichen seiner vollen Arbeitsbreite auf Anschluss gefahren wird.

Wie Fig. 4 zeigt, kann die Lasermessvorrichtung 13 bei Anbau eines Ladewagens 7 im Wesentlichen einen in der Fahrspur vor dem Schlepper 1 liegenden Schwad abtasten, der vom Schlepper 1 überfahren und von der Pickup 26 des daran angehängten Ladewagens 7 aufgenommen werden soll. Die Abtastbreite des Abtastbereiches 15 wird hierbei vorteilhafterweise an die Breite der genannten Pickup 26 angepasst, beispielsweise auf 125 % der Arbeitsbreite der Pickup 26 eingestellt. Hierdurch kann der gesamte Schwad abgetastet werden, wobei vorteilhafterweise aus dem Punkt der maximalen Höhe des Schwads und/oder aus den seitlichen Rändern des abgetasteten Schwads die Schwadmitte bestimmt werden kann, deren Lage bzw. deren Querversatz relativ zur Mitte der Fahrspur des Schleppers ermittelt wird. Anhand des erfassten Querversatzes der Schwadmitte relativ zur Mitte der Fahrspur kann die Lenkhilfevorrichtung 20 ein Lenksignal generieren, um den Ladewagen 7 exakt über den bzw. auf den Schwad zu fahren, um Letzteren von der Pickup 26 sauber aufnehmen zu können.

Alternativ oder zusätzlich kann beispielsweise aus der Höhe des erfassten Schwads und/oder der Breite des erfassten Schwads und/oder der Querschnittsfläche des erfassten Schwads auch zumindest ein anderer Betriebsparameter des Schleppers 1 und/oder des Ladewagens 7 gesteuert werden, beispielsweise dahingehend, dass bei größer werdendem Schwad die Fahrgeschwindigkeit ermäßigt wird oder umgekehrt bei kleiner werdendem Schwad die Fahrgeschwindigkeit erhöht wird, und/oder beispielsweise dahingehend, dass bei zunehmender Schwadgröße die Leistung und/oder Geschwindigkeit der Aufnahmevorrichtung des Ladewagens 7 erhöht wird.

Wie Fig. 5 zeigt, kann bei Anbau eines Pflugs ein vor dem Schlepper 1 liegender Bodenabschnitt von der Lasermessvorrichtung 13 abgetastet werden, wobei der Abtastbereich 15 in Abhängigkeit der ausgelesenen Identifikationsdaten bzw. Voreinstelldaten für den Pflug 8 auf einen Bereich vor dem Schlepper 1 gerichtet wird, der nach links oder rechts quer zur Fahrspurmitte versetzt ist. Ist hierbei ein Wendepflug vorgesehen, wie dies Fig. 5 zeigt, kann der besagte Abtastbereich 15 in Abhängigkeit der Wendestellung des Pflugs 8 einmal nach rechts bzw. einmal nach links versetzt voreingestellt werden, insbesondere derart, dass der Übergangsbereich zwischen einer Ackerfurche, die in einer vorangehenden Fahrgasse erzeugt wurde, zu dem noch unbearbeiteten Feldabschnitt abgetastet wird. Je nach Breite des Pflugs 8 und des seitlichen Versatzes der Anschnittfurche des Pflugs 8 kann der Abtastbereich 15 mehr oder weniger weit quer von der Fahrspurmitte des Schleppers 1 versetzt voreingestellt werden. Aus der dann von der Lasermessvorrichtung 13 erfassten Lage des genannten Übergangsbereiches zwischen Ackerfurchen und noch unbearbeitetem Boden, insbesondere aus dem Querversatz dieses Übergangsbereiches von der Fahrspurmitte und den Geometriedaten des Pflugs kann die Lenkhilfevorrichtung 20 sodann ein entsprechendes Lenksignal erzeugen, um den Pflug 8 exakt entlang der genannten Übergangskante zu führen.

## Patentansprüche

1. Landwirtschaftliche Maschine mit einer Anbauvorrichtung (2) zum Anbau verschiedener Anbaugeräte (3) zur Erntegut- und/oder Bodenbearbeitung, einer Bodenerfassungseinrichtung (11) zum berührungslosen Erfassen einer Boden- und/oder Erntegutkontur, sowie einer Steuervorrichtung (12) zur Steuerung der landwirtschaftlichen Maschine und/oder des Anbaugeräts (3) in Abhängigkeit der erfassten Boden- und/oder Erntegutkontur, wobei die Bodenerfassungseinrichtung (11) zumindest eine Lasermessvorrichtung (13) erfasst, deren Laserstrahl (14) zum Abtasten der Boden- und/oder Erntegutkontur über einen Abtastbereich (15) führbar ist, wobei eine Erfassungsvorrichtung (16) zur Erfassung des jeweils an die Anbauvorrichtung (2) angebauten Anbaugeräts (3) vorgesehen ist und von einer Einstellvorrichtung (17) der Abtastbereich (15) der Lasermessvorrichtung (13) in Abhängigkeit des jeweils erfassten Anbaugeräts (3) einstellbar ist, **dadurch gekennzeichnet, dass** die Steuervorrichtung (12) eine Auswertevorrichtung zur Auswertung der von der Lasermessvorrichtung (13) bereitgestellten Abtastdaten aufweist, die von der Erfassungsvorrichtung (16) derart ansteuerbar ist, dass die Auswertevorrichtung die Datenauswertung individuell an das jeweils erfasst Anbaugerät (3) anpasst und aus verschiedenen, vorbestimmten Auswertemodi nur den Auswertemodus oder nur die Auswertemodi auswählt, die für das jeweils identifizierte Anbaugerät passend sind.

2. Landwirtschaftliche Maschine nach dem vorhergehenden Anspruch, wobei die Erfassungsvorrichtung (16) ein Lesegerät (18) zum Auslesen eines am Anbaugerät (3) anbringbaren Datenspeichers (19), vorzugsweise Transponderchips, in dem Anbaugeräte-Identifikationsdaten und/oder Einstellungsdaten für die Lasermessvorrichtung (13) gespeichert sind, aufweist.

3. Landwirtschaftliche Maschine nach einem der vorhergehenden Ansprüche, wobei die Einstellvorrichtung (17) Ausblendmittel zum Ausblenden zumindest eines Teilbereiches des von der Lasermessvorrichtung (13) abtastbaren Abtastbereiches (15) aufweist.

4. Landwirtschaftliche Maschine nach einem der vorhergehenden Ansprüche, wobei von der Einstellvorrichtung (17) in Abhängigkeit des erfassten Anbaugeräts (3) der Neigungswinkel α des Laserstrahls (14) gegenüber der Horizontalen variiert wird derart, dass der Abtastbereich (15) für ein mit größerer Fahrgeschwindigkeit betreibbares Anbaugerät (3) in Fahrtrichtung betrachtet weiter vorne liegend und für ein mit kleinerer Fahrgeschwindigkeit betreibbares Anbaugerät (3) weniger weit vorne liegend eingestellt wird.

5. Landwirtschaftliche Maschine nach einem der vorhergehenden Ansprüche, wobei von der Einstellvorrichtung (17) in Abhängigkeit der Arbeitsbreite des jeweils erfassten Anbaugeräts (3) der Abtastbereich (15) in seiner Breite verändert wird derart, dass für ein Anbaugerät (3) mit größerer Arbeitsbreite eine größere Abtastbreite und für ein Anbaugerät mit kleinerer Arbeitsbreite eine kleinere Abtastbreite eingestellt wird.

6. Landwirtschaftliche Maschine nach einem der vorhergehenden Ansprüche, wobei von der Einstellvorrichtung (17) in Abhängigkeit des jeweils erfassten Anbaugeräts (3) der Abtastbereich und/oder die Mitte des Abtastbereichs quer zur Fahrspur der Maschine unterschiedlich versetzt wird.

7. Landwirtschaftliche Maschine nach einem der vorhergehenden Ansprüche, wobei der Abtastbereich (15) von der Einstellvorrichtung (17) zumindest teilweise außerhalb der Fahrspur der Maschine auf ein bereits bearbeitetes Flächenstück gerichtet wird, in dem eine Bearbeitungskante aus einer früheren Fahrgasse angeordnet ist, wobei die Größe des Querversatzes des Abtastbereiches (15) von der Mitte der Fahrspur der Maschine weg in Abhängigkeit des jeweils erfassten Anbaugeräts (3) eingestellt wird.

8. Landwirtschaftliche Maschine nach einem der vorhergehenden Ansprüche, wobei der Abtastbereich (15) von der Einstellvorrichtung (17) in Abhängigkeit des jeweils erfassten Anbaugeräts (3) auf eine Abtastbreite eingestellt wird, die weniger als 75 % der Arbeitsbreite des Anbaugeräts beträgt.

9. Landwirtschaftliche Maschine nach einem der vorhergehenden Ansprüche, wobei die Einstellvorrichtung (17) einen Datenspeicher umfasst und/oder damit verbindbar ist, in dem für verschiedene Anbaugeräte jeweils zugehörige Voreinstellungsdaten für die Einstellung des Abtastbereichs (15) der Lasermessvorrichtung (13) abgespeichert sind.

10. Landwirtschaftliche Maschine nach einem der vorhergehenden Ansprüche, wobei die Lasermessvorrichtung (13) ein Umlenksystem zur Umlenkung des Laserstrahls (14) aufweist, wobei die genannte Umlenkvorrichtung von der Einstellvorrichtung (17) ansteuerbar ist.

11. Landwirtschaftliche Maschine nach einem der vorhergehenden Ansprüche, wobei die Lasermessvorrichtung (13) mehrere Lasermessköpfe umfasst, die auf verschiedene Feldabschnitte gerichtet sind und von der Einstellvorrichtung (17) in Abhängigkeit des jeweils erfassten Anbaugeräts (3) auswählbar sind.

12. Landwirtschaftliche Maschine nach einem der vorhergehenden Ansprüche, wobei eine Lenkhilfevorrichtung (20) zur Bereitstellung eines Lenksignals vorgesehen ist, die in Abhängigkeit einer von der Lasermessvorrichtung (13) bestimmten Boden- und/oder Erntegutkontur und deren Lage relativ zur Lasermessvorrichtung (13) ansteuerbar ist, wobei die Lenkhilfevorrichtung (20) insbesondere eine Auswerteeinrichtung umfasst, die in Abhängigkeit des jeweils erfassten Anbaugeräts (3) und dessen Arbeitsbreite sowie der erfassten Lage der Boden- und/oder Erntegutkontur aus einem seitlich beabstandeten Flächenstück, das in einer früheren Fahrgasse bearbeitet wurde, das Lenksignal generiert.

13. Landwirtschaftliche Maschine nach einem der vorhergehenden Ansprüche, wobei die Steuervorrichtung (12) in Abhängigkeit eines jeweils durch die Erfassungsvorrichtung (16) erfassten Anbaugeräts (3) Steuerungsfunktionen und/oder Steuerungsbefehle anpasst derart, dass auf Basis der von der Lasermessvorrichtung (13) bereitgestellten Abtastdaten nur die für das jeweils identifizierte Anbaugerät (3) passenden Steuerungsfunktionen und/oder Steuerungsbefehle erzeugt werden.

14. Landwirtschaftliche Maschine nach einem der vorhergehenden Ansprüche, wobei die Steuervorrichtung (12) derart konfiguriert ist, dass:
a) bei Anbau eines Zetters der Abtastbereich (15) auf einen Bodenbereich neben der Fahrspur der Maschine eingestellt wird, wobei eine Höhe des Futtergutteppichs bestimmt und auf Höhenunterschiede hin ausgewertet wird, wobei die Lage eines Konturabschnitts, in dem ein Höhenunterschied einen vorbestimmten Wert übersteigt, für die Generierung eines Lenksignals verwendet wird, und/oder
b) bei Anbau eines Schwaders (5) der Abtastbereich (15) auf einen Bodenbereich neben der Fahrspur der Maschine außerhalb der Arbeitsbreite des Schwaders (5) gerichtet wird und die Lasermessvorrichtung (13) einen Schwad aus einer vorherigen Fahrgasse abtastet, wobei aus dem Querabstand des erfassten Schwads von der Lasermessvorrichtung (13) und der Arbeitsbreite des erfassten Schwaders (5) ein Lenksignal bestimmt wird, und/oder
c) bei Anbau einer Mähmaschine (4) der Abtastbereich (15) auf einen Bodenbereich neben der Fahrspur der Maschine innerhalb und außerhalb der Arbeitsbreite der angebauten Mähmaschine (4) gerichtet wird, wobei der Querabstand einer Bestandskante des noch ungemähten Ernteguts bestimmt und aus dem Querabstand der genannten Bestandskante sowie der Arbeitsbreite der erfassten, angebauten Mähmaschine (4) ein Lenksignal erzeugt wird, und/oder
d) bei Anbau eines Ladewagens (7) und/oder einer Ballenpresse und/oder eines Feldhäckslers der Abtastbereich (15) auf einen in der Fahrspur der Maschine liegenden Bodenbereich gerichtet wird, wobei ein Querabstand des Schwads von der Mitte der Fahrspur der Maschine bestimmt und aus dem genannten Querabstand ein Lenksignal erzeugt wird und/oder eine Größe, eine Höhe und/oder ein Volumen des Erntegutschwads bestimmt wird, anhand dessen ein Betriebsparameter des angebauten Ladewagens (7), der angebauten Ballenpresse und/oder des angebauten Feldhäckslers eingestellt wird, und/oder
e) bei Anbau eines Pflugs (8) der Abtastbereich (15) auf einen von der Mitte der Fahrspur der Maschine querversetzten Bodenbereich gerichtet wird, wobei der Höhenverlauf der Bodenkontur im erfassten Abtastbereich bestimmt und der Querabstand des Übergangsbereiches von bereits beackerter Spur und noch unbeackerter Spur bestimmt und aus dem Querabstand des genannten Konturübergangs ein Lenkhilfesignal erzeugt wird, und/oder
f) bei Anbau eines Wendepflugs von der Erfassungsvorrichtung (16) die Wendestellung des Pflugs erfasst wird und der Abtastbereich (15) je nach, erfasster Wendestellung des Pflugs nach rechts oder nach links quer aus der Mitte der Fahrspur versetzt wird.

## Claims

1. Agricultural machine having an attachment device (2) for attaching various attachment apparatus (3) for crop and/or soil cultivation, a ground detection device (11) for contact-free detection of a ground and/or crop outline, as well as a control device (12) for controlling the agricultural machine and/or the attachment apparatus (3) depending on the detected ground and/or crop outline, wherein the ground detection device (11) detects at least one laser measuring device (13), the laser beam (14) of which can be guided to scan the ground and/or crop outline over a scanning region (15), wherein a detection device (16) for detecting the respective attachment apparatus (3) attached to the attachment device (2) is provided and the scanning region (15) of the laser measuring device (13) can be adjusted by an adjustment device (17) depending on the respectively detected attachment apparatus (3), **characterised in that** the control device (12) has an evaluation device for evaluating the scanning data provided by the laser measuring device (13), which can be activated by the detection device (16) in such a way that the evaluation device individually adapts the data evaluation to the respectively detected attachment apparatus (3) and selects, from various, predetermined evaluation modes, only the evaluation modes that are suitable for the respectively identified attachment apparatus.

2. Agricultural machine according to the preceding claim, wherein the detection device (16) has a reading apparatus (18) for reading out from a data storage facility (19), preferably a transponder chip, which can be applied to the attachment apparatus (3), in which facility attachment apparatus identification data and/or adjustment data for the laser measuring device (13) are stored.

3. Agricultural machine according to one of the preceding claims, wherein the adjustment device (17) has hiding means for hiding at least one section of the scanning region (15) that can be scanned by the laser measuring device (13).

4. Agricultural machine according to one of the preceding claims, wherein the angle of inclination α of the laser beam (14) compared to the horizontal can, depending on the detected attachment apparatus (3), be varied by the adjustment device (17) in such a way that the scanning region (15) for an attachment apparatus (3) that can be operated with greater driving speed, when observed in the direction of travel, is adjusted to be located further forward, and, for an attachment apparatus (3) that can be operated with less driving speed, is adjusted to be located less further forward.

5. Agricultural machine according to one of the preceding claims, wherein the scanning region (15) is changed in terms of its width by the adjustment device (17), depending on the operating width of the respectively detected attachment apparatus (3), in such a way that a greater scanning width is adjusted for an attachment apparatus (3) with a greater scanning width and a smaller scanning width is adjusted for an attachment apparatus with a smaller scanning width.

6. Agricultural machine according to one of the preceding claims, wherein the scanning region and/or the centre of the scanning region is displaced transverse to the rut of the machine by the adjustment device (17) in a different manner depending on the respectively detected attachment apparatus (3).

7. Agricultural machine according to one of the preceding claims, wherein the scanning region (15) is aimed at a patch that has already been processed by the adjustment device (17) at least partially outside the rut of the machine, in which patch a processing outline from an earlier tramline is arranged, wherein the value of the transverse displacement of the scanning region (15) away from the centre of the rut of the machine is adjusted depending on the respective detected attachment apparatus (3).

8. Agricultural machine according to one of the preceding claims, wherein the scanning region (15) is adjusted by the adjustment device (17), depending on the respectively detected attachment apparatus (3), to a scanning width that is less than 75% of the operating width of the attachment apparatus.

9. Agricultural machine according to one of the preceding claims, wherein the adjustment device (17) comprises a data storage facility and/or can be connected thereto, in which, for various attachment apparatus, respectively allocated preadjustment data are stored for the adjustment of the scanning region (15) of the laser measuring device (13).

10. Agricultural machine according to one of the preceding claims, wherein the laser measuring device (13) has a deflection system for deflecting the laser beam (14), wherein said deflection device can be activated by the adjustment device (17).

11. Agricultural machine according to one of the preceding claims, wherein the laser measuring device (13) comprises several laser measuring heads that are aimed at various field sections are can be selected by the adjustment device (17) depending on the respectively detected attachment apparatus (3).

12. Agricultural machine according to one of the preceding claims, wherein a steering aid device (20) for providing a steering signal is provided, which can be activated depending on a ground and/or crop outline determined by the laser measuring device (13) and the position thereof relative to the laser measuring device (13), wherein the steering aid device (20) in particular comprises an evaluation device which, depending on the respectively detected attachment apparatus (3) and the operating width thereof, as well as the detected position of the ground and/or crop outline from a laterally separated patch, which has been processed in a previous tramline, generates the steering signal.

13. Agricultural machine according to one of the preceding claims, wherein the control device (12), depending on a respective attachment apparatus (3) detected by the detection device (16), adapts control functions and/or control commands in such a way that, based on the scanning data provided by the laser measuring device (13), only the control functions and/or control commands that are suitable for the respectively identified attachment apparatus (3) are generated.

14. Agricultural machine according to one of the preceding claims, wherein the control device (12) is configured in such a way that:
a) when a tedder is attached, the scanning region (15) is adjusted to a ground region alongside the rut of the machine, wherein a height of the blanket of forage is determined and is evaluated in terms of height differences, wherein the position of an outline section in which a height difference exceeds a predetermined value is used for the generation of a steering signal, and/or,
b) when a hay rake (5) is attached, the scanning region (15) is aimed at a ground region alongside the run of the machine outside the operating width of the hay rake (5) and the laser measuring device (13) scans a swath from a previous tramline, wherein a steering signal is determined from the transverse separation of the detected swath from the laser measuring device (13) and the operating width of the detected hay rake (5), and/or,
c) when a mowing machine (4) is used, the scanning region (15) is aimed at a ground region alongside the rut of the machine within and outside the operating width of the attached mowing machine (4), wherein the transverse separation of a crop edge of the crops that have not yet been mown is determined and a steering signal is generated from the transverse separation of said crop edge and the operating width of the detected, attached mowing machine (4), and/or,
d) when a loading wagon (7) and/or a baling press and/or a field chopper is attached, the scanning region (15) is aimed at a ground region located in the rut of the machine, wherein a transverse separation of the swath from the centre of the rut of the machine is determined and a steering signal is generated from said transverse separation, and/or a size, a height and/or a volume of the crop swath is determined, with the aid of which an operating parameter of the attached loading wagon (7), the attached baling press and/or the attached field chopper is adjusted, and/or,
e) when a plough (8) is attached, the scanning region (15) is aimed at a ground region that has transverse displacement from the centre of the rut of the machine, wherein the height variation of the ground outline is determined in the detected scanning region and the transverse separation of the transition region between a track that has already been ploughed and a track that is yet to be ploughed is determined and a steering aid signal is generated from the transverse separation of said outline transition, and/or,
f) when a turning plough is attached, the turning position of the plough is detected by the detection device (16) and the scanning region (15) is, according to the detected turning position of the plough, displaced transversely from the centre of the rut to the right or to the left.

## Revendications

1. Machine agricole, comportant un dispositif d'attelage (2) destiné à l'attelage de divers outils portés (3) pour le traitement de la récolte et/ou du sol, un système de détection du sol (11) destiné à détecter sans contact un contour du sol et/ou des produits à récolter, ainsi qu'un dispositif de commande (12) destiné à commander la machine agricole et/ou l'outil porté (3) en fonction du contour détecté du sol et/ou des produits à récolter, ledit système de détection du sol (11) comprenant au moins un dispositif de mesure à laser (13), dont le rayon laser (14) peut être guidé sur une zone de balayage (15) pour explorer le contour du sol et/ou des produits à récolter, un dispositif de détection (16) étant prévu pour détecter l'outil porté (3) attelé dans chaque cas au dispositif d'attelage (2), et la zone de balayage (15) du dispositif de mesure à laser (13) pouvant être réglée par un dispositif de réglage (17) en fonction de l'outil porté (3) détecté dans chaque cas, **caractérisée en ce que** le dispositif de commande (12) comporte un dispositif d'analyse, qui est destiné à analyser les données de balayage fournies par le dispositif de mesure à laser (13) et qui peut être actionné par le dispositif de détection (16) de telle sorte que le dispositif d'analyse ajuste l'analyse des données individuellement à l'outil porté (3) détecté dans chaque cas et sélectionne parmi différents modes d'analyse prédéterminés uniquement le mode d'analyse ou uniquement les modes d'analyse qui sont adaptés à l'outil porté identifié dans chaque cas.

2. Machine agricole selon la revendication précédente, dans laquelle le dispositif de détection (16) comporte un appareil de lecture (18) destiné à lire dans une mémoire de données (19), de préférence une puce de transpondeur, qui peut être agencée sur l'outil porté (3) et dans laquelle sont stockées des données d'identification des outils portés et/ou des données de réglage pour le dispositif de mesure à laser (13).

3. Machine agricole selon l'une quelconque des revendications précédentes, dans laquelle le dispositif de réglage (17) comporte des moyens de masquage destinés à masquer au moins une zone partielle de la zone de balayage (15) pouvant être explorée par le dispositif de mesure à laser (13).

4. Machine agricole selon l'une quelconque des revendications précédentes, dans laquelle l'angle d'inclinaison α du rayon laser (14) par rapport à l'horizontale peut être modifié par le dispositif de réglage (17) en fonction de l'outil porté (3) détecté, de telle sorte que la zone de balayage (15) peut être réglée pour un outil porté (3) pouvant être actionné à une vitesse plus élevée et situé plus en avant par référence au sens de roulement et pour un outil porté (3) pouvant être actionné à une vitesse plus faible et situé moins en avant par référence au sens de roulement.

5. Machine agricole selon l'une quelconque des revendications précédentes, dans laquelle la zone de balayage (15) peut être modifiée en largeur par le dispositif de réglage (17) en fonction de la largeur de travail de l'outil porté (3) détecté dans chaque cas, de telle sorte qu'une plus grande largeur de balayage est réglée pour un outil porté (3) avec une plus grande largeur de travail et une plus petite largeur de balayage est réglée pour un outil porté avec une plus petite largeur de travail.

6. Machine agricole selon l'une quelconque des revendications précédentes, dans laquelle la zone de balayage et/ou le milieu de la zone de balayage sont décalés différemment transversalement à la voie de roulement de la machine par le dispositif de réglage (17) en fonction de l'outil porté (3) détecté dans chaque cas.

7. Machine agricole selon l'une quelconque des revendications précédentes, dans laquelle la zone de balayage (15) est dirigée par le dispositif de réglage (17) au moins partiellement en dehors de la voie de roulement de la machine sur une portion de surface déjà traitée, dans laquelle se situe un bord de récolte provenant d'un couloir de travail précédent, la valeur du décalage transversal de la zone de balayage (15) s'écartant du milieu de la voie de roulement de la machine étant réglée en fonction de l'outil porté (3) détecté dans chaque cas.

8. Machine agricole selon l'une quelconque des revendications précédentes, dans laquelle, en fonction de l'outil porté (3) détecté dans chaque cas, le dispositif de réglage (17) règle la zone de balayage (15) sur une largeur de balayage qui correspond à moins de 75 % de la largeur de travail de l'outil porté.

9. Machine agricole selon l'une quelconque des revendications précédentes, dans laquelle le dispositif de réglage (17) comporte une mémoire de données et/ou peut être reliée à une mémoire de données, dans laquelle sont stockées pour chacun des différents outils portés les données de préréglage correspondantes pour le réglage de la zone de balayage (15) du dispositif de mesure à laser (13).

10. Machine agricole selon l'une quelconque des revendications précédentes, dans laquelle le dispositif de mesure à laser (13) comporte un système de déviation destiné à dévier le rayon laser (14), ledit dispositif de déviation pouvant être actionné par le dispositif de réglage (17).

11. Machine agricole selon l'une quelconque des revendications précédentes, dans laquelle le dispositif de mesure à laser (13) comporte plusieurs têtes de mesure à laser qui sont dirigées vers différentes zones du champ et qui peuvent être choisies par le dispositif de réglage (17) en fonction de l'outil porté (3) détecté dans chaque cas.

12. Machine agricole selon l'une quelconque des revendications précédentes, dans laquelle est prévu un dispositif d'assistance au guidage (20) qui est destiné à délivrer un signal de guidage et qui peut être actionné en fonction d'un contour du sol et/ou des produits à récolter déterminé par le dispositif de mesure à laser (13) et de la position de ceux-ci par rapport au dispositif de mesure à laser (13), ledit dispositif d'assistance au guidage (20) comportant en particulier un système d'analyse qui génère le signal de guidage en fonction de l'outil porté (3) détecté dans chaque cas et de la largeur de travail de celui-ci, ainsi que de la position détectée du contour du sol et des produits à récolter à partir d'une portion de surface écartée latéralement, qui a été traitée dans un couloir de travail précédent.

13. Machine agricole selon l'une quelconque des revendications précédentes, dans laquelle le dispositif de commande (12) ajuste les fonctions de commande et/ou les instructions de commande en fonction d'un outil porté (3) détecté dans chaque cas par le dispositif de détection (16), de telle sorte que sur la base des données de balayage fournies par le dispositif de mesure à laser (13) sont générées uniquement les fonctions de commande et/ou les instructions de commande adaptées à l'outil porté (3) identifié dans chaque cas.

14. Machine agricole selon l'une quelconque des revendications précédentes, dans laquelle le dispositif de commande (12) est configuré de telle sorte que :
a) en cas d'attelage d'un épandeur-faneur, la zone de balayage (15) est réglée sur une zone du sol à côté du couloir de travail de la machine, une hauteur du tapis des produits à récolter étant déterminée et l'analyse portant sur les différences de hauteur, la position d'une partie du contour, dans laquelle une différence de hauteur est supérieure à une valeur prédéterminée, étant utilisée pour générer un signal de guidage, et/ou
b) en cas d'attelage d'une andaineuse (5), la zone de balayage (15) est dirigée sur une zone du sol à côté du couloir de travail de la machine en dehors de la largeur de travail de l'andaineuse (5) et le dispositif de mesure à laser (13) explore un andain provenant d'un couloir de travail précédent, un signal de guidage étant déterminé à partir de la distance transversale de l'andain détecté par le dispositif de mesure à laser (13) et à partir de la largeur de travail de l'andaineuse (5) détectée, et/ou
c) en cas d'attelage d'une moissonneuse (4), la zone de balayage (15) est dirigée sur une zone du sol à côté du couloir de travail de la machine à l'intérieur et à l'extérieur de la largeur de travail de la moissonneuse (4), la distance transversale d'un bord de la récolte non encore moissonnée étant déterminée et un signal de guidage étant déterminé à partir de la distance transversale dudit bord de la récolte et à partir de la largeur de travail de la moissonneuse (4) portée détectée, et/ou
d) en cas d'attelage d'un véhicule de chargement (7) et/ou d'une presse à balles et/ou d'une hacheuse, la zone de balayage (15) est dirigée sur une zone du sol située dans le couloir de travail de la machine, une distance transversale entre l'andain et le milieu de la voie de roulement étant déterminée et un signal de guidage étant généré à partir de ladite distance transversale et/ou une dimension, une hauteur et/ou un volume de l'andain étant déterminés, à partir desquels est réglé un paramètre de service du véhicule de chargement (7) porté, de la presse à balles portée et/ou de la hacheuse portée, et/ou
e) en cas d'attelage d'une charrue (8), la zone de balayage (15) est dirigée sur une zone du sol décalée transversalement par rapport au milieu du couloir de travail de la machine, l'évolution de la hauteur du contour du sol dans la zone de balayage détectée étant déterminée et la distance transversale de la zone de transition du sillon déjà labouré et du sillon non encore labouré étant déterminée, et un signal d'assistance au guidage étant généré à partir de la distance transversale de ladite transition des contours, et/ou
f) en cas d'attelage d'une charrue à bascule, la position de basculement de la charrue étant détectée par le dispositif de détection (16) et, en fonction de la position de basculement détectée de la charrue, la zone de balayage (15) étant décalée vers la droite ou vers la gauche transversalement à partir du milieu de la voie de roulement.
